# EUROPEAN PATENT SPECIFICATION

(11) **EP 3 208 324 B1**
(45) Date of publication and mention of the grant of the patent: **01.04.2020**
(21) Application number: 15851215.2
(22) Date of filing: 13.07.2015
(51) Int. Cl.: C09K 3/00, C08F 230/08, C08F 290/06, C08L 55/00, C08L 83/05, C08L 83/07, C08F 220/14, C09D 183/04, C08L 83/04, C09J 7/40

(54) **ORGANOPOLYSILOXANE COMPOSITION CONTAINING LIGHT RELEASE ADDITIVE AND RELEASE SHEET**
ORGANOPOLYSILOXANZUSAMMENSETZUNG ENTHALTEND ADDITIV MIT LEICHTER ABLÖSUNG FÜR TRENNFOLIE SOWIE TRENNFOLIE
COMPOSITION D'ORGANOPOLYSILOXANE CONTENANT UN ADDITIF-ADHÉSIF LÉGER POUR FEUILLE ANTI-ADHÉSIVE ET FEUILLE ANTI-ADHÉSIVE

(30) Priority: 17.10.2014 JP 2014212783
(43) Date of publication of application: 23.08.2017
(73) Proprietor: Shin-Etsu Chemical Co., Ltd., Tokyo 100-0004 (JP)
(72) Inventor: NAKAYAMA, Ken, Annaka-shi Gunma 379-0224 (JP); IHARA, Toshiaki, Annaka-shi Gunma 379-0224 (JP)
(74) Representative: Mewburn Ellis LLP
(86) International application number: PCT/JP2015/070020
(87) International publication number: WO 2016/059841

(56) References cited:
- EP-A1- 3 208 322
- EP-A2- 0 210 041
- WO-A1-2008/133117
- JP-A- S6 429 459
- JP-A- H01 146 983
- JP-A- H06 506 014
- JP-A- 2001 305 346
- JP-A- 2007 224 234
- JP-B2- 3 021 247
- US-A- 5 061 481

## Description

### TECHNICAL FIELD

This invention relates to an organopolysiloxane composition for a release sheet containing an easy release additive has an excellent release-easing effect, and which provides a release coating that enables a pressure-sensitive adhesive sheet or the like peeled therefrom to exhibit a high subsequent adhesion ratio. The invention also relates to a release sheet produced using such a composition.

### BACKGROUND

Release properties with respect to pressure-sensitive materials have hitherto been imparted by forming a cured coating of a silicone composition on the surface of a sheet-like substrate of paper, plastic or the like.

Known methods of forming cured coatings of silicone compositions on substrate surfaces include (1) to (3) below.
(1) The method of forming a release coating on a substrate face by addition-reacting an alkenyl group-containing organopolysiloxane with an organohydrogenpolysiloxane using a platinum compound as the catalyst (JP-A S47-32072).
(2) The method of forming a release coating by condensation-reacting a hydroxyl group or alkoxy group-containing organopolysiloxane with an organohydrogenpolysiloxane using an organic acid metal salt such as an organotin compound as the catalyst (JP-B S35-13709).
(3) The method of forming a release coating by using ultraviolet radiation or electron beams to induce the radical polymerization of an acrylic group-containing organopolysiloxane with a photoreaction initiator (JP-A S54-162787).

Silicone compositions for release paper wherein a diorganopolysiloxane having phenyl groups on side chains has been added to a pressure-sensitive adhesive material having a strong adhesive force are known (JP-B H03-52498; JP No. 3021247). These silicone compositions have excellent easy release properties and are regarded as useful for improving workability in, for example, rewinding operations in the production of pressure-sensitive adhesive paper, and waste removal operations and label attaching operations in the production of pressure-sensitive adhesive labels.

However, because such phenyl group-containing organopolysiloxanes are non-reactive, they are not fixed within the release coating and thus adhere to the surface of strongly adhesive materials. This invites a decline in the adhesive force, which has the drawback of greatly lowering the subsequent adhesion ratio.

In order to achieve an easier release without adding such a non-reactive component, methods that use organopolysiloxanes which contain reactive groups such as alkenyl groups, SiH groups or hydroxyl groups in addition to phenyl groups have been reported (JP-B H06-60287; JP No. 2519571; JP-B H06-19028; JP-A H07-82487).

Yet, although these do exhibit a high subsequent adhesion ratio owing to the absence of non-reactive ingredients, additives which have a release force that is low enough to be able to work properly with strongly adhesive materials have not been developed.

Compositions that exhibit a low release force and are not of a type that uses phenyl group-containing diorganopolysiloxanes have hitherto been reported in JP-A H02-166163; JP No. 3198926; JP No. 3905228; and JP-A 2012-224780.

Because these compositions do not use non-reactive ingredients, they achieve a high subsequent adhesion ratio. However, compositions of this type which have a release force low enough to be able to work properly with strongly adhesive materials have not been developed. Moreover, when a large amount of alkenyl group-containing branched organopolysiloxane is used, production costs rise, lowering the practical utility.

EP-A-0210041 describes release coatings for release sheets based on a vinyl copolymer, such as a poly(meth) acrylate, to which is grafted polymeric siloxane moieties having a number average molecular weight above 1,000.

JP-A-64/29459 describes a release coating formed by crosslinking a silicone copolymer having grafted alkenyl-containing groups with polyorganohydrogensiloxane having at least 2 SiH groups, by means of a platinum curing catalyst.

JP-A-1/146983 describes a release coating made from a silicone macromonomer terminated with polymerisable functional groups such as (meth)acrylate groups, the macromonomer being further polymerized with copolymerisable monomers such as alkyl (meth)acrylates.

### SUMMARY OF THE INVENTION

### PROBLEMS TO BE SOLVED BY THE INVENTION

In the light of the above, this disclosure relates to an easy release additive for a release sheet which, when added in a small amount to an organopolysiloxane composition for a release sheet, can obtain the desired low release force, and which gives an excellent release coating that enables a pressure-sensitive adhesive sheet peeled therefrom to have a high subsequent adhesion ratio.

### MEANS FOR SOLVING THE PROBLEMS

The inventors have carried out extensive investigations in order to achieve these objects. As a result, they have discovered that a release sheet having a cured coating formed by applying onto a substrate and then curing an organopolysiloxane composition containing an easy release additive which includes an acrylic-silicone graft copolymer that has a weight-average molecular weight of from 1,000 to 100,000 and is obtained by radical polymerizing (A) an acrylic group and/or methacrylic group-containing organopolysiloxane compound with (B) a radical polymerizable monomer having one radical polymerizable group per molecule exhibits an excellent release-easing effect and enables a pressure-sensitive adhesive sheet peeled therefrom to have a high subsequent adhesion ratio.

Accordingly, this invention provides the following.
[1] A first aspect, as specified in claim 1, is an organopolysiloxane composition for a release sheet, comprising components (a) to (d) below:
   (a) 100 parts by weight of organopolysiloxane having two or more alkenyl groups per molecule, other than component (b);
   (b) 0.1 to 20 parts by weight of easy release additive;
   (c) 0.1 to 30 parts by weight of organohydrogenpolysiloxane having two or more silicon-bonded hydrogen atoms per molecule; and
   (d) platinum group metal catalyst at a platinum metal weight, based on the overall composition, of from 10 to 1,000 ppm
   wherein the easy release additive is an acrylic-silicone graft copolymer which has a weight-average molecular weight of from 1,000 to 100,000 and is obtainable by radical polymerizing
   (A) an acrylic group and/or methacrylic group-containing organopolysiloxane compound with
   (B) a radical polymerizable monomer having one radical polymerizable group per molecule.
[2] Organopolysiloxane composition of [1], wherein the organopolysiloxane compound (A) is a radical polymerizable silicone macromonomer of general formula (1) below 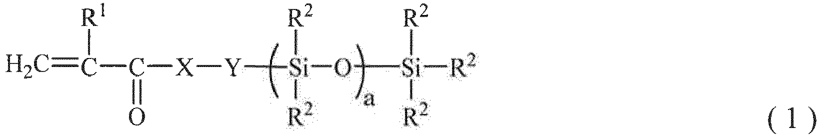 wherein R¹ is a hydrogen atom or a methyl group; X is a group selected from an oxygen atom, an NH group and a sulfur atom; Y is a divalent hydrocarbon group of 1 to 12 carbon atoms which may have an intervening oxygen atom; each R², which may be the same or different, is a substituted or unsubstituted monovalent hydrocarbon group of 1 to 20 carbon atoms, a hydrogen atom, a hydroxyl group, an alkoxy group of 1 to 10 carbon atoms or a substituent of general formula (2) below 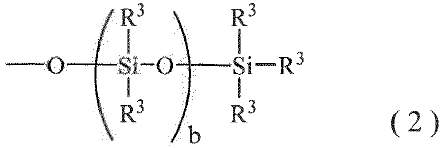 wherein each R³, which may be the same or different, is a substituted or unsubstituted monovalent hydrocarbon group of 1 to 20 carbon atoms, a hydrogen atom, a hydroxyl group, or an alkoxy group of 1 to 10 carbon atoms; and the subscript b is an integer from 0 to 300; and the subscript a is an integer from 0 to 1,000.
[3] Organopolysiloxane composition of [1] or [2] which is characterized in that the acrylic group and/or methacrylic group-containing organopolysiloxane compound (A) and the radical polymerizable monomer (B) in the acrylic-silicone graft copolymer have a polymerization weight ratio (A)/(B) therebetween of from 30/70 to 99/1.
[4] Organopolysiloxane composition of any of [1] to [3] in which the weight-average molecular weight of the acrylic-silicone graft copolymer is from 2,000 to 30,000.
[5] Organopolysiloxane composition of any of [1] to [4] in which the radical polymerizable monomer (B) includes an alkyl (meth)acrylate of 1 to 30 carbon atoms.
[6] Organopolysiloxane composition of [5] in which the radical polymerizable monomer (B) includes methyl (meth)acrylate.
[7] A method of making a release sheet (claim 9) comprising applying an organopolysiloxane composition of any one of [1] to [6] onto one or both sides of a sheet-like substrate and heating to form a cured coating.
[8] A release sheet (claim 12) comprising a sheet-like substrate and a cured coating formed by applying an organopolysiloxane composition of any one of [1] to [6] onto one or both sides of the substrate and heating.

The release sheet may have a release force, as determined by attaching Tesa 7475 tape to the cured coating and carrying out measurement at an angle of 180° and a peel rate of 0.3 m/min, of 50 mN/25 mm or less, and a subsequent adhesion ratio of at least 80%.

### ADVANTAGEOUS EFFECTS OF THE INVENTION

The organopolysiloxane composition for a release sheet has the advantageous effect of obtaining a very light release force as compared with when the additive is not added. In addition, compared with conventional light release additives, a release coating can be obtained that enables a pressure-sensitive adhesive sheet peeled therefrom to have a high subsequent adhesion ratio.

### EMBODIMENTS FOR CARRYING OUT THE INVENTION

The invention is described in detail below.

### ACRYLIC-SILICONE GRAFT COPOLYMER

The acrylic-silicone graft copolymer used in the easy release additive is a copolymer of (A) an organopolysiloxane compound having an acrylic group and/or a methacrylic group (collectively referred to below as a "(meth)acrylic group") with (B) a radical polymerizable monomer having one radical polymerizable group per molecule.

The weight-average molecular weight of this copolymer, expressed as the polystyrene equivalent from the results of measurement by gel permeation chromatography (GPC) using toluene as the developing solvent, is from 1,000 to 100,000, preferably from 1,500 to 50,000, and even more preferably from 2,000 to 30,000. At a weight-average molecular weight below 1,000, the subsequent adhesion ratio decreases, whereas at above 100,000, the dispersibility in an organopolysiloxane composition decreases.

### Component (A): (Meth)acrylic Group-Containing Organopolysiloxane Compound

The organopolysiloxane compound (A) is not particularly limited so long it has a (meth)acrylic group. However from the standpoint of the ease of copolymerization with (B), the radical polymerizable monomer having one radical polymerizable group per molecule, the ease of synthesizing the organopolysiloxane compound itself, and the advantageous effects of the easy release additive of the invention and other considerations, it is preferably a radical polymerizable silicone macromonomer of general formula (1) below.

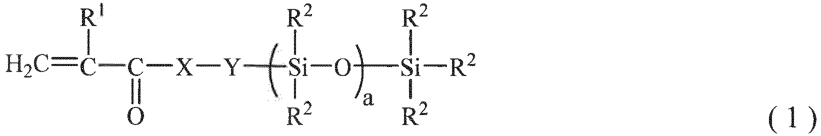

In general formula (1), R¹ is a hydrogen atom or a methyl group; and X is a divalent functional group selected from the following: an oxygen atom, an NH group and a sulfur atom.

Y is a divalent hydrogen group of 1 to 12, preferably 1 to 10, carbon atoms which may have an intervening oxygen atom. Illustrative examples include alkylene groups such as methylene, ethylene, propylene (trimethylene, methylethylene), butylene (tetramethylene, methylpropylene), hexamethylene and octamethylene groups; arylene groups such as a phenylene group; combinations of two or more of these groups (e.g. alkylene/arylene groups), and -CH₂CH₂-O-CH₂CH₂-, -CH₂CH₂-O-CH₂CH₂-O-CH₂CH₂-, -CH(CH₃)CH₂-O-CH(CH₃)CH₂- and -CH₂CH₂CH₂CH₂-O-CH₂CH₂CH₂CH₂-. Y is preferably an ethylene group, a propylene group or a butylene group.

The subscript a is an integer from 0 to 1,000, preferably from 0 to 500, and more preferably from 0 to 200.

Each R², which may be the same or different, is a substituted or unsubstituted monovalent hydrocarbon group of 1 to 20, preferably 1 to 18, carbon atoms, a hydrogen atom, a hydroxyl group, an alkoxy group of 1 to 10, preferably 1 to 8, carbon atoms, or a substituent of general formula (2) below.

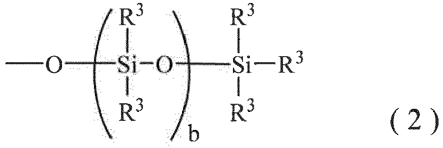

In formula (2), each R³, which may be the same or different, is a substituted or unsubstituted monovalent hydrocarbon group of 1 to 20, preferably 1 to 18, carbon atoms, a hydrogen atom, a hydroxyl group, or an alkoxy group of 1 to 10, preferably 1 to 8, carbon atoms; and the subscript b is an integer from 0 to 300.

Illustrative examples of the substituted or unsubstituted monovalent hydrocarbon groups of 1 to 20 carbon atoms represented by R² and R³ include alkyl groups such as methyl, ethyl, propyl and butyl groups; cycloalkyl groups such as cyclohexyl; aryl groups such as phenyl and tolyl groups; aralkyl groups such as benzyl and phenethyl groups; and any of these groups in which some or all hydrogen atoms bonded to carbon atoms are substituted with, e.g. hydroxyl groups, cyano groups or halogen atoms, such as hydroxypropyl, cyanoethyl, 1-chloropropyl and 3,3,3-trifluoropropyl groups. Illustrative examples of alkoxy groups of 1 to 10 carbon atoms include methoxy, ethoxy, propoxy and butoxy groups. R² is preferably an alkyl group or aryl group, and more preferably an alkyl group of 1 to 5 carbon atoms. R³ is preferably an alkyl group or aryl group, and more preferably an alkyl group of 1 to 5 carbon atoms.

The subscript b is an integer from 0 to 300, preferably from 0 to 100, and more preferably from 0 to 50.

Illustrative examples of component (A) include, but are not limited to, the compounds shown below. In the following formulae, "OMe" stands for a methoxy group and "Ph" stands for a phenyl group.

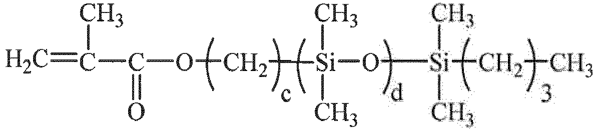

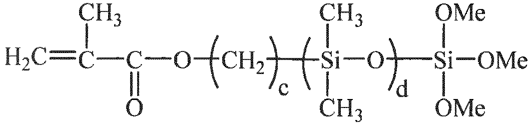

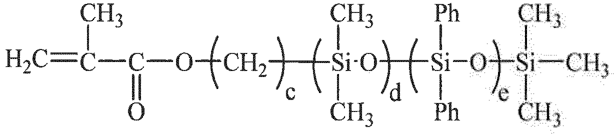

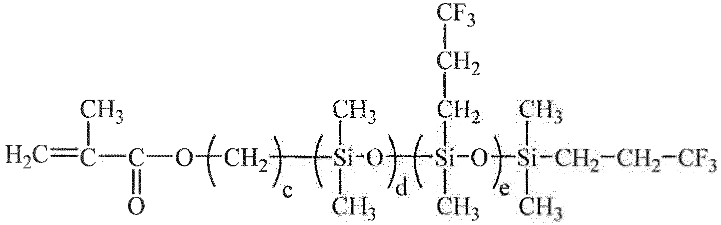

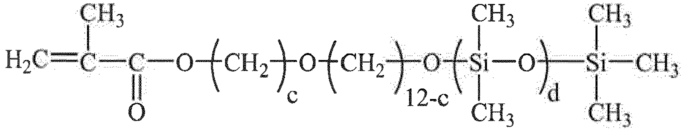

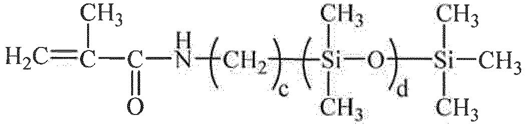

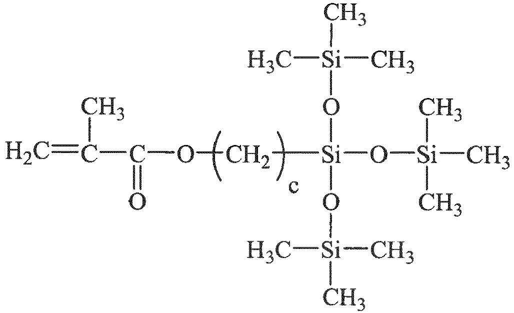

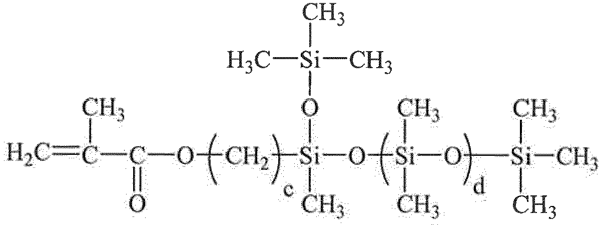

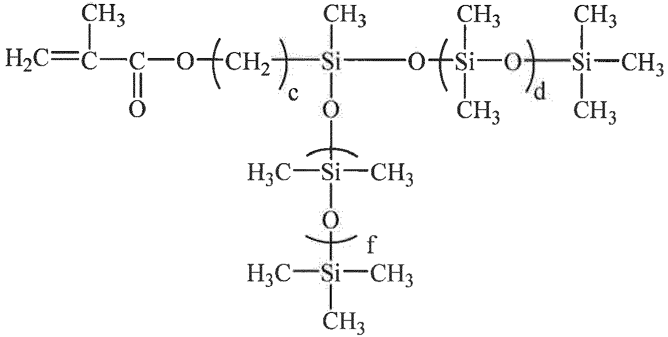

In these formulae, the subscripts c, d, e and f satisfy the following conditions: 1 ≤ c ≤ 12, 0 ≤ d ≤ 1,000, 0 ≤ e ≤ 1,000, 0 ≤ d+e ≤ 1,000, and 0 ≤ f ≤ 300.

When the organopolysiloxane compound of general formula (1) above is used as component (A), a silicone-grafted acrylic polymer having organopolysiloxane groups on side chains is obtained.

The acrylic-silicone graft copolymer used in the easy release additive, aside from such silicone-grafted acrylic polymers, may be one in which organosiloxane groups have been introduced onto the backbone. Organopolysiloxane compounds that may be used for introducing organosiloxane groups onto the backbone are exemplified by (A') modified silicones having acrylic groups or methacrylic groups at both ends.

Illustrative examples include, but are not limited to, those shown below. In the following formula, "Ph" stands for a phenyl group.

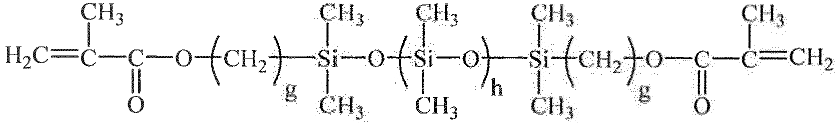

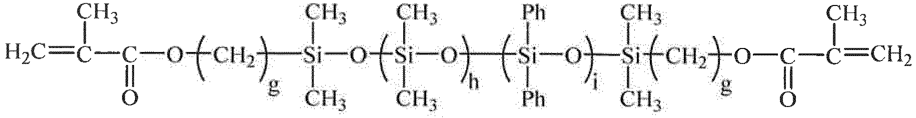

In these formulae, the subscripts g, h and i satisfy the following conditions: 1 ≤ g ≤ 12, 0 ≤ h ≤ 1,000, 0 ≤ i ≤ 1,000 and 0 ≤ h+i ≤ 1,000.

When component (A') is used, the content thereof based on component (A) is preferably from 1 to 50 wt%, and more preferably from 1 to 30 wt%. When the content is too low, the release-easing effect from introducing organosiloxane groups onto the backbone may not be obtained; when the content is too high, the compatibility in the composition may decline.

### Component (B): Radical Polymerizable Monomer

The radical polymerizable monomer (B) used in the easy release additive, which may be of one type used alone or of two or more types used in admixture, is not particularly limited, provided it has one radical polymerizable group per molecule.

Component (B) is exemplified by compounds having one radical polymerizable group per molecule, such as an acrylic, methacrylic, styryl, cinnamate ester, vinyl or allyl group. Illustrative examples include ester compounds of (meth)acrylic acid, such as methyl (meth)acrylate, ethyl (meth)acrylate, n-butyl (meth)acrylate, 2-ethylhexyl (meth)acrylate, lauryl (meth)acrylate, stearyl (meth)acrylate, cyclohexyl (meth)acrylate, benzyl (meth)acrylate, isobornyl (meth)acrylate, trifluoropropyl (meth)acrylate, perfluorobutylethyl (meth)acrylate and perfluorooctylethyl (meth)acrylate; epoxy group-containing radical polymerizable monomers such as glycidyl (meth)acrylate, β-methylglycidyl (meth)acrylate and 3,4-epoxycyclohexylmethyl (meth)acrylate; hydroxyl group-containing radical polymerizable monomers such as 2-hydroxyethyl (meth)acrylate, 2-hydroxypropyl (meth)acrylate and 2-hydroxybutyl (meth)acrylate; radical polymerizable silane compounds such as γ-methacryloxypropyltrimethoxysilane, γ-methacryloxypropylmethyldimethoxysilane, γ-methacryloxypropyldimethylmethoxysilane, γ-methacryloxypropyltriethoxysilane, γ-methacryloxypropylmethyldiethoxysilane, γ-methacryloxypropyltributoxysilane, γ-methacryloxypropyltriisopropenoxysilane, γ-acryloxypropyltrimethoxysilane, acryloxymethyltrimethoxysilane, γ-acryloxypropyltriethoxysilane, γ-acryloxypropylmethyldiethoxysilane, styryltrimethoxysilane, styryltriethoxysilane and α-methylstyryltrimethoxysilane; polyoxyalkylene group-containing radical polymerizable monomers; and glycerol (meth)acrylate.

Taking into consideration the release-easing effect and high subsequent adhesion ratio effect obtained with the easy release additive of the invention, it is preferable to include an alkyl (meth)acrylate having from 1 to 30 carbon atoms, and more preferable to include methyl (meth)acrylate.

### Component (A)/Component (B) Ratio

The polymerization weight ratio (A)/(B) between the (meth)acrylic group-containing organopolysiloxane compound (A) and the radical polymerizable monomer (B) having one radical polymerizable group per molecule is preferably in the range of 30/70 to 99/1, more preferably in the range of 40/60 to 97/3, and even more preferably in the range of 50/50 to 95/5. When the polymerization weight ratio (A)/(B) is lower than 30/70, the amount of silicone component is small, as a result of which the compatibility with the organopolysiloxane composition decreases and the easy release additive may separate out. On the other hand, when the ratio is higher than 99/1, the release-easing effect may decrease.

When component (A') is used, the polymerization weight ratio, expressed in this case as [(A) + (A')]/(B), is preferably in the range of 30/70 to 99/1, more preferably in the range of 40/60 to 97/3, and even more preferably in the range of 50/50 to 95/5.

### Method of Synthesizing Acrylic-Silicone Graft Copolymer

The copolymerization of monomer starting materials which include (A) a meth(acrylic) group-containing organopolysiloxane compound and (B) a radical polymerizable monomer having one radical polymerizable group per molecule is carried out in the presence of a peroxide such as benzoyl peroxide, dicumyl peroxide, lauroyl peroxide or tert-butyl peroxy-2-ethylhexanoate or an ordinary radical polymerization initiator such as an azo compound (e.g. 2,2'-azobis(2-methylbutyronitrile)). Any of the following methods may be suitably used: solution polymerization, emulsion polymerization, suspension polymerization, bulk polymerization.

Of the foregoing polymerization methods, solution polymerization in particular is preferred because the molecular weight of the acrylic-silicone graft copolymer thus obtained is easily regulated within an optimal range. Illustrative examples of solvents that may be used in this case include any one, or mixtures of two or more, of the following: aromatic hydrocarbons such as benzene, toluene and xylene; ketones such as acetone, methyl ethyl ketone and methyl isobutyl ketone; esters such as ethyl acetate, n-butyl acetate and isobutyl acetate; and alcohols such as ethanol, isopropanol, n-butanol and isobutanol.

The polymerization temperature is preferably in the range of 50 to 180°C, and more preferably in the range of 60 to 120°C. Under these temperature conditions, the polymerization reaction can be brought to completion in from about 1 to about 10 hours. Methods for removing the copolymer from the copolymerization solution include, without particular limitation, the method of evaporating off the solvent, and the method of precipitating the copolymer by adding a poor solvent such as water or methanol to the copolymerization solution, and then drying the precipitated copolymer.

### ORGANOPOLYSILOXANE COMPOSITION

The organopolysiloxane composition for a release sheet that uses the acrylic-silicone graft copolymer-containing easy release additive is a composition which includes the following ingredients:
(a) an organopolysiloxane having two or more alkenyl groups per molecule,
(b) the easy release additive for a release sheet containing the above-described acrylic-silicone graft copolymer,
(c) an organohydrogenpolysiloxane having two or more silicon-bonded hydrogen atoms per molecule, and
(d) a platinum group metal catalyst;
and, where necessary, also includes as an optional ingredient:
(e) a solvent or water for dilution.

### (a) Alkenyl Group-Containing Organopolysiloxane

Component (a) is an organopolysiloxane having two or more alkenyl groups per molecule. An organopolysiloxane of general formula (3) below having two or more alkenyl groups per molecule is preferred.

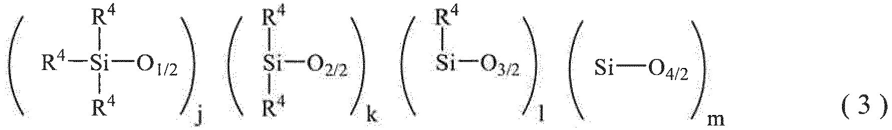

In formula (3), R⁴ represents like or unlike groups selected from among substituted or unsubstituted monovalent hydrocarbon groups of 1 to 20 carbon atoms which have no aliphatic unsaturated bonds and alkenyl groups of 2 to 12 carbon atoms which may have an intervening oxygen atom, with at least two R⁴ groups being alkenyl groups.

Illustrative examples of the monovalent hydrocarbon groups of 1 to 20 carbon atoms include monovalent hydrocarbon groups of 1 to 10 carbon atoms selected from among alkyl groups of preferably 1 to 6 carbon atoms, such as methyl, ethyl, propyl and butyl groups; cycloalkyl groups of preferably 5 to 8 carbon atoms, such as cyclohexyl; aryl groups of preferably 6 to 10 carbon atoms, such as phenyl and tolyl groups; aralkyl groups of preferably 7 to 10 carbon atoms, such as benzyl; and any of these groups in which some or all hydrogen atoms bonded to carbon atoms are substituted with, for example, hydroxyl groups, cyano groups or halogen atoms, such as hydroxypropyl, cyanoethyl, 1-chloropropyl and 3,3,3-trifluoropropyl groups. From the standpoint of release properties in particular, alkyl groups and aryl groups are preferred, with methyl, ethyl, propyl and phenyl groups being more preferred.

The alkenyl group of 2 to 12 carbon atoms which may have an intervening oxygen atom is preferably a group represented by -(CH₂)ₙ-CH=CH₂ (wherein n is 0 or an integer from 1 to 10). Illustrative examples include vinyl, propenyl, butenyl, hexenyl, octenyl and decenyl groups. Alternatively, an ether bond may be included on the methylene chain thereof, examples of such groups being -(CH₂)₂-O-CH₂-CH=CH₂ and -(CH₂)₃-O-CH₂-CH=CH₂. Of these, a vinyl group is preferred.

The number of alkenyl groups per molecule of the organopolysiloxane of component (a) is two or more; less than two alkenyl groups is undesirable because of the likelihood of uncrosslinked molecules remaining after the cure, lowering the curability. The alkenyl group content per 100 g of organopolysiloxane is preferably from 0.001 to 0.5 mole, and more preferably from 0.002 to 0.45 mole. At an alkenyl group content below 0.001 mole, the curability may decrease; at a content above 0.5 mole, the release may become tighter.

The subscript j in formula (3) is an integer of at least 2, and preferably from 2 to 300. The subscript k is an integer of at least 1, and preferably from 30 to 20,000. The subscript 1 is an integer of 0 or more, and preferably from 0 to 100. The subscript m is an integer of 0 or more, and preferably from 0 to 100. These subscripts satisfy the condition 30 ≤ j+k+l+m ≤ 20,000, and preferably 50 ≤ j+k+l+m ≤ 15,000. When the sum j+k+l+m is less than 30, penetration into the substrate tends to be excessive, leading to undesirable effects. On the other hand, when this sum exceeds 20,000, coatability onto the substrate decreases and mist generation may arise in high-speed coating.

The viscosity of component (a) at 25°C is preferably from 50 mPa·s to a viscosity as a 30% toluene solution of 50,000 mPa·s, and more preferably from 50 mPa·s to a viscosity as a 30% toluene solution of 30,000 mPa·s. The viscosity can be measured with a rotational viscometer (the same applies below).

Illustrative examples of component (a) include, but are not limited to, the following. In the formulae below, "Me", "Vi" and "Ph" stand for, respectively, methyl, vinyl and phenyl groups.

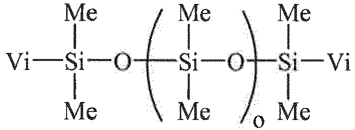

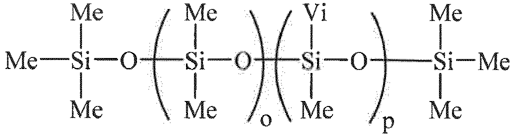

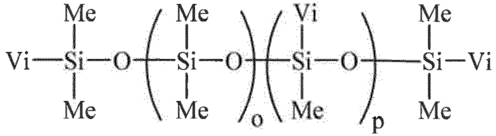

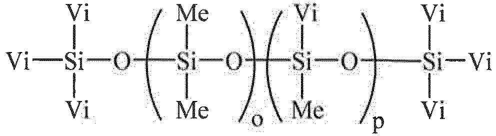

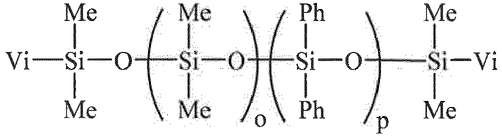

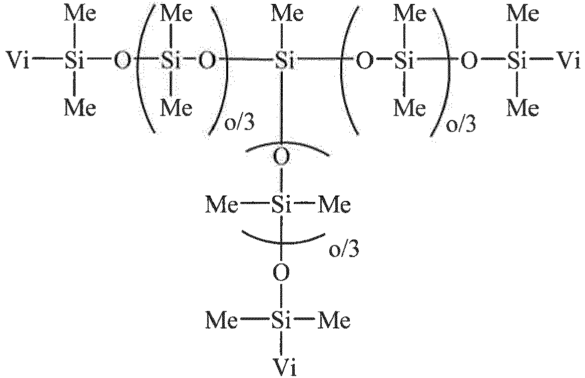

In these formulae, the subscripts o and p satisfy the conditions 30 ≤ o ≤ 15,000; 1 ≤ p ≤ 15,000, and 31 ≤ o+p ≤ 15,030.

### (b) Easy Release Additive

Component (b) is the easy release additive for release sheets which includes the above acrylic-silicone graft copolymer. By including this ingredient, a very low release force that is an object herein can be obtained, and an excellent release coating which enables a pressure-sensitive adhesive sheet peeled therefrom to have a high subsequent adhesive ratio can be provided.

The content of component (b) per 100 parts by weight of component (a) is preferably from 0.1 to 20 parts by weight, and more preferably from 0.1 to 10 parts by weight. When the component (b) content is too low, the release-easing effect may become small; on the other hand, when the content is too high, the curability may decrease.

### (c) Organohydrogenpolysiloxane

The organohydrogenpolysiloxane of component (c) has at least two silicon-bonded hydrogen atoms (also referred to below as "SiH groups") per molecule, and forms a cured coating by way of addition reactions between these SiH groups and the alkenyl groups in component (a). This component (c) is exemplified by compounds of average compositional formula (4) below.

R⁵_{q}HᵣSiO₍₄-_{q-r)/2} (4)

In formula (4), R⁵ is a substituted or unsubstituted monovalent hydrocarbon group with no aliphatic unsaturated bonds. Illustrative examples include alkyl groups of preferably 1 to 6 carbon atoms, such as methyl, ethyl, propyl and butyl groups; cycloalkyl groups of preferably 5 to 8 carbon atoms, such as cyclohexyl; aryl groups of preferably 6 to 10 carbon atoms, such as phenyl and tolyl groups; aralkyl groups of preferably 7 to 10 carbon atoms, such as benzyl; and any of these groups in which some or all hydrogen atoms bonded to carbon atoms are substituted with, e.g. hydroxyl groups, cyano groups or halogen atoms, such as hydroxypropyl, cyanoethyl, 1-chloropropyl and 3,3,3-trifluoropropyl groups. Of these, alkyl groups and aryl groups are preferred. From the standpoint of increasing the addition reaction rate, a methyl group is preferred.

The subscript q is a positive number that is from 0 to 2.7, and preferably from 0.4 to 2.5. The subscript r is a positive number that is from 0.1 to 3, and preferably from 0.1 to 2. The sum q+r is 3 or less, and is especially from 0.5 to 2.7.

Exemplary organohydrogenpolysiloxanes of formula (4) include polymers or copolymers having at least one type of unit from among R⁵HSiO_{2/2} units (R⁵ being as defined above; the same applies below), HSiO_{3/2} units and R⁵₂HSiO_{1/2} units, and in some cases additionally having at least one type of unit from among R⁵₂SiO_{2/2} units, R⁵SiO_{3/2} units and R⁵₃SiO_{1/2} units. The sum of R⁵HSiO_{2/2} units or R⁵₂HSiO_{1/2} units is preferably at least 2 per molecule, and more preferably from 10 to 100 per molecule. Also, SiO_{4/2} units may be included within a range that allows the advantageous effects of the composition to be obtained.

The content of SiH groups in the organohydrogenpolysiloxane is preferably from 0.1 to 3 mol/100 g, and especially from 0.2 to 2 mol/100 g.

This organohydrogenpolysiloxane may be linear, branched or cyclic.

Illustrative examples of component (c) include, but are not limited to, those shown below. In these formulae, "Ph" stands for a phenyl group

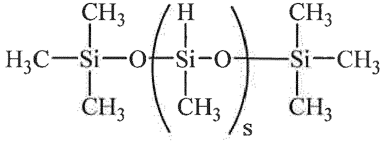

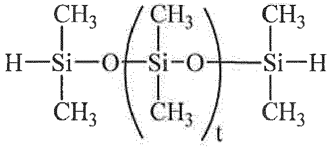

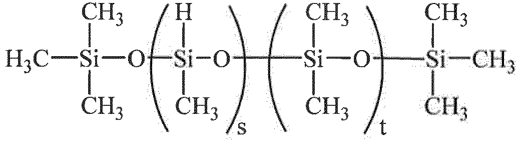

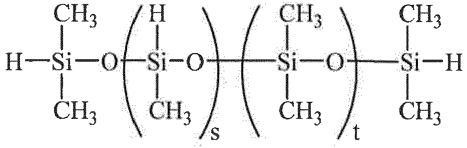

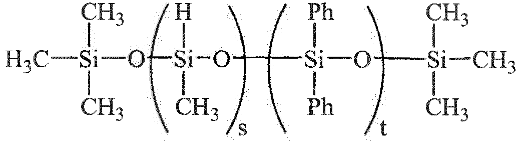

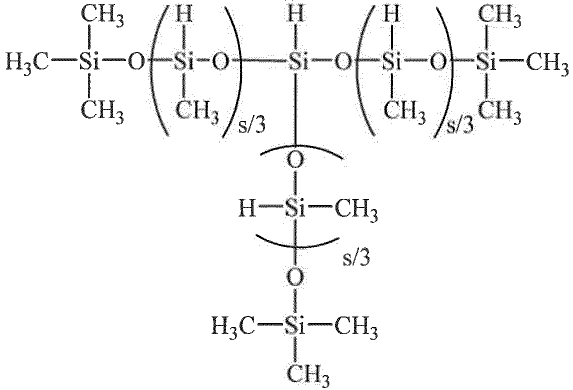

In these formulae, the subscripts s and t satisfy the conditions 2 ≤ s ≤ 100 and 1 ≤ t.

The content of component (c), from the standpoint of obtaining a suitable crosslink density, is from 0.1 to 30 parts by weight, preferably from 0.5 to 15 parts by weight, and more preferably 0.5 to 10 parts by weight, per 100 parts by weight of component (a).

Moreover, at this time, the content of component (c) is preferably an amount such that the number of moles of silicon-bonded hydrogen atoms in component (c) per mole of alkenyl groups in component (a) is in the range of 1 to 5, and especially 1.3 to 2.5. At a molar ratio smaller than 1, the curability decreases and adherence to the substrate may worsen; at a molar ratio larger than 5, the release force may become larger, making practical release characteristics difficult to obtain.

### (d) Platinum Group Metal Catalyst

The platinum group metal catalyst used as component (d) is a catalyst for promoting addition reactions between component (a) and component (c). Any catalyst known to persons skilled in the art as a catalyst that promotes so-called hydrosilylation reactions may be used. Such platinum group metal catalysts are exemplified by platinum catalysts, palladium catalysts, rhodium catalysts and ruthenium catalysts. Of these, the use of platinum catalysts is especially preferred. Illustrative examples of such platinum catalysts include chloroplatinic acid, alcohol solutions or aldehyde solutions of chloroplatinic acid, and complexes of chloroplatinic acid with various olefins or vinyl siloxanes.

The content of component (d) should be an amount that is efficacious as a catalyst. Specifically, to obtain a good cured coating, and also from an economic perspective, the content, based on the weight of platinum group metal, with respect to component (a) is preferably in the range of 10 to 1,000 ppm, and especially 20 to 500 ppm.

### (e) Solvent or Water for Dilution

A solvent or water for dilution may be included as an optional ingredient in the organopolysiloxane composition of the invention.

The organopolysiloxane composition of the invention may be prepared as a solventless composition obtained by blending specific amounts of above components (a) to (d). However, where necessary, preparation as an emulsion-type composition diluted with water, or as a solvent-based composition diluted with a solvent is also possible. Dilution with a solvent or with water provides such practical advantages as improving the coating workability and improving the condition of the applied film, such as the thickness of the applied film and the finished state of the surface.

Illustrative examples of solvents that may be used include aromatic hydrocarbon compounds such as toluene and xylene, aliphatic hydrocarbon compounds such as hexane, heptane and isoparaffin, ketone compounds such as acetone, methyl ethyl ketone and methyl isobutyl ketone, alcohol compounds such as methanol, ethanol and i-propanol, ester compounds such as ethyl acetate and butyl acetate, ether compounds such as diisopropyl ether and 1,4-dioxane, and mineral oils. However, any compound capable of dissolving the silicone may be used for this purpose.

When component (e) is included, the content thereof per 100 parts by weight of component (a) is preferably from 100 to 20,000 parts by weight, and especially from 200 to 10,000 parts by weight. At less than 100 parts by weight, the advantages of dilution may not be obtained; at more than 20,000 parts by weight, further improvements in the advantageous effects are unlikely.

### Other Optional Ingredients

The organopolysiloxane composition of the invention is obtained by blending specific amounts of above components (a) to (d), although other ingredients may be optionally added within a range that does not detract from the objects and advantageous effects of the invention. Ingredients that are known to be commonly used in silicone-based release agent compositions may be added in conventional amounts.

Known compounds such as various organic nitrogen compounds, organosilicon compounds, acetylene compounds, oxime compounds and organochlorine compounds, may be used as other optionally added ingredients for such purposes as to extend the pot life. Illustrative examples include acetylene alcohols such as 3-methyl-1-butyn-3-ol, 3,5-dimethyl-1-hexyn-3-ol, 3-methyl-1-penten-3-ol and phenylbutynol; acetylene compounds such as 3-methyl-3-1-penten-1-yne and 3,5-dimethyl-1-hexyn-3-yne; reaction products of these acetylene compounds with an alkoxysilane or siloxane or with a hydrogensilane; vinyl siloxanes such as cyclic tetramethylvinylsiloxane; organic nitrogen compounds such as benzotriazole; and also organophosphorus compounds, oxime compounds and organochlorine compounds.

The content of these compounds should be an amount at which a good pot life can be obtained. From 0.01 to 10 parts by weight, and preferably from 0.05 to 5 parts by weight, per 100 parts by weight of component (a) is generally used.

A surfactant or a high-molecular-weight emulsifier may be included in order to form an emulsion-type composition. A suitable content thereof is in a range of 0.1 to 10 parts by weight per 100 parts by weight of component (a).

In addition, known antioxidants, pigments, stabilizers, antistatic agents, defoamers, adhesion enhancers, thickeners, and inorganic fillers such as silica may be included where necessary as optional ingredients within ranges that do not detract from the advantageous effects of the invention.

From the standpoint of pot life, it is desirable for preparation of the inventive organopolysiloxane composition for a release sheet to be carried out by uniformly mixing components (a) to (c) and optional ingredients beforehand, and subsequently adding component (d) just prior to use.

### COATED ARTICLE

A cured coating can be formed on a substrate by using a coating method such as coating with a comma coater, lip coater, roll coater, roll coater, die coater, knife coater, blade coater, rod coater, kiss coater, gravure coater or wire bar coater, screen coating, dip coating or cast coating to coat the above-described organopolysiloxane composition for a release sheet, either as is or after dilution with the solvent or water for dilution described above, onto one or both sides of a sheet-like substrate such as paper or plastic film to a coating weight of from 0.01 to 100 g/m², and then heating at 50 to 200°C for 1 to 120 seconds. In cases where a release layer is produced on both sides of the substrate, it is preferable to carry out the cured coat-forming operation on one side of the substrate at a time.

In this disclosure, the term 'release sheet' encompasses not only products in which the sheet-like substrate is paper, but also products in which the sheet-like substrate is formed of various known types of plastic film.

Illustrative examples of substrates include polyethylene laminated paper, glassine paper, woodfree paper, kraft paper, various types of coated papers such as clay-coated paper, synthetic papers such as Yupo, polyethylene films, polypropylene films such as CPP and OPP, polyester films such as polyethylene terephthalate film, polyamide films, polyimide films, polylactic acid films, polyphenol films and polycarbonate films. In order to improve the adherence of the release layer to these substrates, use may be made of a substrate whose surfaces have been corona treated, treating by etching, or plasma treated.

### PERFORMANCE

A release sheet produced by coating 1.0 to 1.2 g/m² of the above organopolysiloxane composition onto a polyethylene laminated paper substrate and heating at 140°C for 30 seconds has a release force, as measured by the FINAT test method, that is preferably not more than 50 mN/25 mm, and more preferably not more than 40 mN/25 mm. This has the advantage of enabling use of the release sheet as a release material for pressure-sensitive adhesive tape required to have high release properties.

Also, because the subsequent adhesion ratio of the release sheet can be set to 80% or more, and especially 85% or more, a seal or the like that has been peeled from the release sheet of the invention retains a sufficient adhesive force and, when attached to an adherend, can firmly stick thereto.

The release force and subsequent adhesion ratio are measured by the following procedure.

### Release Force Measurement Method

A Tesa 7475 (a trade name of Tesa Tape, Inc.) acrylic pressure-sensitive adhesive tape having a width of 25 mm is attached to the release sheet, a load of 20 g/cm² is applied thereto within a 70°C dryer, and the resulting laminate is removed 24 hours later. After 30 minutes of air-cooling, a tensile testing machine (DSC-500 tensile tester, from Shimadzu Corporation) is used to pull the Tesa 7475 tape at an angle of 180° and a peel rate of 0.3 m/min, and the force (mN/25 mm) required to peel off the tape, i.e. the release force, is measured.

### Method of Measuring Subsequent Adhesion Ratio

The Tesa 7475 tape that was peeled off in the above release force measurement is attached to a stainless steel plate, the Tesa 7475 tape is pulled with the above tensile testing machine at an angle of 180° and a peel rate of 0.3 m/min, and the force F (mN/25 mm) required to peel off the tape is measured. As a control, "virgin" Tesa 7475 tape that has not been used is attached to a stainless steel plate and the force F₀ (mN/25 mm) required to peel off this tape is measured in the same way as when measuring F above. The subsequent adhesion ratio (%) is calculated from the formula F/F₀ × 100, thereby determining what percentage of the adhesive force the Tesa 7475 tape used in release force measurement retains relative to the virgin Tesa 7475 tape.

### EXAMPLES

Synthesis Examples, Examples and Comparative Examples are given below to more concretely illustrate the invention, although the invention is not limited by these Examples.

### SYNTHESIS OF EASY RELEASE ADDITIVE

### Synthesis Example 1

A glass reactor equipped with a stirrer, a thermometer, a reflux condenser and a dropping device was charged with 30.0 parts by weight of toluene and heated to 90 to 100°C, following which a mixed solution of 27.0 parts by weight (0.013 mol) of the radical polymerizable silicone macromonomer of formula (5) below, 4.9 parts by weight (0.049 mol) of methyl methacrylate, 34.5 parts by weight (0.102 mol) of stearyl methacrylate, 2.5 parts by weight (0.012 mol) of tert-butyl peroxy-2-ethylhexanoate and 51.8 parts by weight of toluene was added dropwise over 4 hours under a stream of nitrogen. After 2 hours of polymerization at 90 to 100°C, 0.4 part by weight (0.002 mol) of tert-butyl peroxy-2-ethylhexanoate was added and 2 hours of polymerization was carried out. This was followed by drying in a vacuum desiccator under conditions of 150°C and 10 mmHg, giving an acrylic-silicone graft copolymer. The polystyrene-equivalent weight-average molecular weight measured by GPC was 14,000.

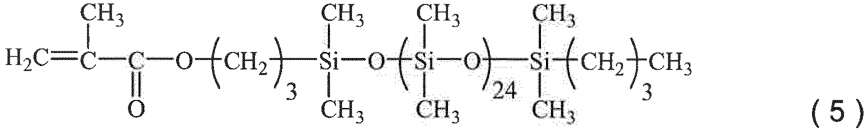

### Synthesis Example 2

Aside from changing the mixed solution of Synthesis Example 1 to a mixed solution of 45.6 parts by weight (0.022 mol) of the radical polymerizable silicone macromonomer of formula (5) above, 4.4 parts by weight (0.044 mol) of methyl methacrylate, 33.2 parts by weight (0.098 mol) of stearyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 18,000.

### Synthesis Example 3

Aside from changing the mixed solution of Synthesis Example 1 to a mixed solution of 45.6 parts by weight (0.022 mol) of the radical polymerizable silicone macromonomer of formula (5) above, 9.3 parts by weight (0.093 mol) of methyl methacrylate, 16.6 parts by weight (0.049 mol) of stearyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 14,000.

### Synthesis Example 4

Aside from changing the mixed solution of Synthesis Example 1 to a mixed solution of 91.2 parts by weight (0.044 mol) of the radical polymerizable silicone macromonomer of formula (5) above, 2.2 parts by weight (0.022 mol) of methyl methacrylate, 33.2 parts by weight (0.098 mol) of stearyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 24,000.

### Synthesis Example 5

Aside from changing the mixed solution of Synthesis Example 1 to a mixed solution of 45.6 parts by weight (0.022 mol) of the radical polymerizable silicone macromonomer of formula (5) above, 14.2 parts by weight (0.142 mol) of methyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 9,000.

### Synthesis Example 6

Aside from changing the mixed solution of Synthesis Example 1 to a mixed solution of 45.6 parts by weight (0.022 mol) of the radical polymerizable silicone macromonomer of formula (5) above, 14.2 parts by weight (0.142 mol) of methyl methacrylate, 1.3 parts by weight (0.006 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 16,000.

### Synthesis Example 7

Aside from changing the mixed solution of Synthesis Example 1 to a mixed solution of 55.7 parts by weight (0.067 mol) of the radical polymerizable silicone macromonomer of formula (6) below, 9.8 parts by weight (0.098 mol) of methyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 9,000.

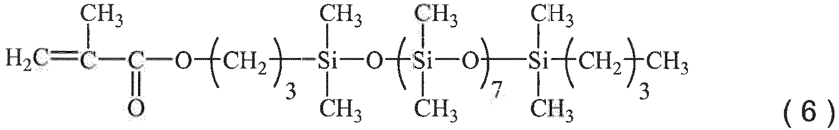

### Synthesis Example 8

Aside from changing the mixed solution of Synthesis Example 1 to a mixed solution of 55.7 parts by weight (0.067 mol) of the radical polymerizable silicone macromonomer of formula (6) above, 9.8 parts by weight (0.098 mol) of methyl methacrylate, 0.2 parts by weight (0.001 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 82,000.

### Synthesis Example 9

Aside from changing the mixed solution of Synthesis Example 1 to a mixed solution of 74.2 parts by weight (0.089 mol) of the radical polymerizable silicone macromonomer of formula (6) above, 7.5 parts by weight (0.075 mol) of methyl methacrylate, 13.9 parts by weight (0.064 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 2,000.

### Synthesis Example 10

Aside from changing the mixed solution of Synthesis Example 1 to a mixed solution of 74.2 parts by weight (0.089 mol) of the radical polymerizable silicone macromonomer of formula (6) above, 7.5 parts by weight (0.075 mol) of methyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 11,000.

### Synthesis Example 11

Aside from changing the mixed solution of Synthesis Example 1 to a mixed solution of 5.3 parts by weight (0.006 mol) of the radical polymerizable silicone macromonomer of formula (6) above, 15.8 parts by weight (0.158 mol) of methyl methacrylate, 1.3 parts by weight (0.006 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 6,000.

### Synthesis Example 12

Aside from changing the mixed solution of Synthesis Example 1 to a mixed solution of 55.7 parts by weight (0.067 mol) of the radical polymerizable silicone macromonomer of formula (6) above, 9.8 parts by weight (0.098 mol) of methyl methacrylate, 0.1 part by weight (0.0005 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 172,000.

### Synthesis Example 13

Aside from changing the mixed solution of Synthesis Example 1 to a mixed solution of 5.5 parts by weight (0.055 mol) of methyl methacrylate, 36.9 parts by weight (0.109 mol) of stearyl methacrylate, 2.5 parts by weight (0.012 mol) of tert-butyl peroxy-2-ethylhexanoate and 51.8 parts by weight of toluene, the same procedure was carried out as in Synthesis Example 1, giving an acrylic-silicone graft copolymer. The polystyrene-equivalent weight-average molecular weight measured by GPC was 6,000.

### PRODUCTION OF ORGANOPOLYSILOXANE COMPOSITION AND RELEASE SHEET

### Example 1

An organopolysiloxane composition was prepared by mixing together, as component (a), 100 parts by weight of the dimethylpolysiloxane having vinyldimethylsiloxy groups at both ends of formula (7) below; as component (b), 2 parts by weight of the acrylic-silicone graft copolymer from Synthesis Example 1; as component (c), 2.2 parts by weight of the methylhydrogenpolysiloxane of formula (8) below; and, as an optional ingredient, 1.0 parts by weight of ethynylcyclohexanol; and subsequently, just prior to use, adding as component (d) a complex of chloroplatinic acid and vinyl siloxane in an amount having a platinum weight basis, with respect to component (a), of 100 ppm.

A release sheet was produced by coating the resulting organopolysiloxane composition onto a polyethylene laminated paper substrate to a coating weight of 1.0 to 1.2 g/m² and heating for 30 seconds in a 140°C hot-air dryer to form a coating.

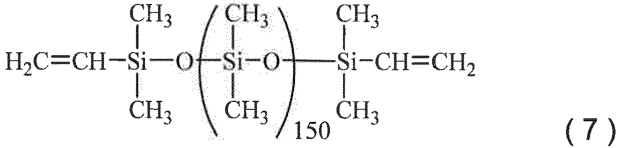

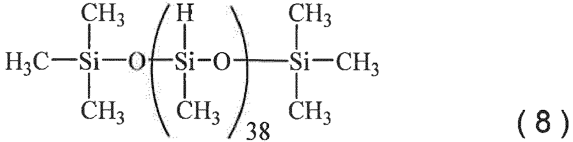

### Example 2

Aside from using as component (b) the copolymer from Synthesis Example 2, the same procedure was carried out as in Example 1.

### Example 3

Aside from using as component (b) the copolymer from Synthesis Example 3, the same procedure was carried out as in Example 1.

### Example 4

Aside from using as component (b) the copolymer from Synthesis Example 4, the same procedure was carried out as in Example 1.

### Example 5

Aside from using as component (b) the copolymer from Synthesis Example 5, the same procedure was carried out as in Example 1.

### Example 6

Aside from using as component (b) the copolymer from Synthesis Example 6, the same procedure was carried out as in Example 1.

### Example 7

Aside from using as component (b) the copolymer from Synthesis Example 7, the same procedure was carried out as in Example 1.

### Example 8

Aside from using as component (b) the copolymer from Synthesis Example 8, the same procedure was carried out as in Example 1.

### Example 9

Aside from using as component (b) the copolymer from Synthesis Example 9, the same procedure was carried out as in Example 1.

### Example 10

Aside from using as component (b) the copolymer from Synthesis Example 10, the same procedure was carried out as in Example 1.

### Example 11

Aside from using as component (b) the copolymer from Synthesis Example 11, the same procedure was carried out as in Example 1.

### Comparative Example 1

Aside from not adding component (b), the same procedure was carried out as in 1.

### Comparative Example 2

Aside from using the copolymer from Synthesis Example 12 as component (b), the same procedure was carried out as in Example 1.

### Comparative Example 3

Aside from using the copolymer from Synthesis Example 13 as component (b), the same procedure was carried out as in Example 1.

### Comparative Example 4

Aside from using as component (b) 2 parts by weight of the phenyl group-containing organopolysiloxane of formula (9) below, the same procedure was carried out as in Example 1.

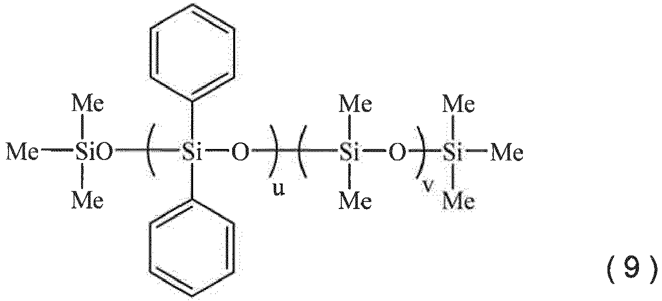

In formula (9), the subscripts u and v are positive numbers which set the viscosity to 3,000 mm²/s and the phenyl group content to 5 mol%.

### Comparative Example 5

Aside from using as component (b) the organopolysiloxane of formula (10) below which is capped at the ends with, respectively, a dimethylvinylsilyl group and a trimethylsilyl group and contains phenyl groups on side chains, the same procedure was carried out as in Example 1.

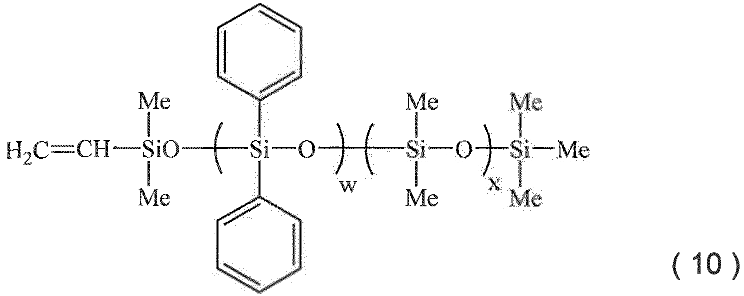

In formula (10), the subscripts w and x are positive numbers which set the viscosity to 3,000 mm²/s and the phenyl group content to 5 mol%.

### Comparative Example 6

Aside from using as component (b) the organopolysiloxane of formula (11) below which is capped at both ends with a dimethylhydroxysilyl group and contains phenyl groups on side chains, the same procedure was carried out as in Example 1.

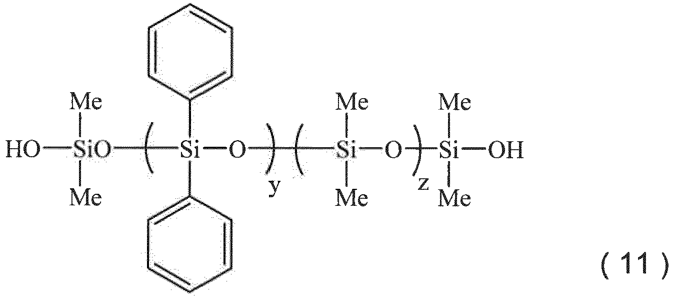

In formula (11), the subscripts y and z are positive numbers which set the viscosity to 3,000 mm²/s and the phenyl group content to 5 mol%.

### Example 12

An organopolysiloxane composition was prepared by mixing together, as component (a), 30 parts by weight of an organopolysiloxane (vinyl group content = 0.02 mol/100 g) which has a viscosity at 25°C as a 30 wt% toluene solution of 5,000 mPa·s, is capped at both ends of the molecular chain by trimethylsilyl groups represented by (CH₃)₃SiO_{1/2} and whose backbone, exclusive of the ends, consists of 1.5 mol% of methylvinylsiloxane units represented as (CH₃)(CH₂=CH)SiO_{2/2} and 98.5 mol% of dimethylsiloxane units represented as (CH₃)₂SiO_{2/2}; as component (b), 0.6 part by weight of the acrylic-silicone graft copolymer from Synthesis Example 2; as component (c), 0.7 part by weight of the methylhydrogenpolysiloxane of formula (8) above; as component (e), 570 parts by weight of toluene; and, as an optional ingredient, 1.0 part by weight of 3-methyl-1-butyn-3-ol; and subsequently, just prior to use, adding as component (d) a complex of chloroplatinic acid and vinyl siloxane in an amount having a platinum weight basis, with respect to component (a), of 100 ppm.

A release sheet was produced by coating 0.7 to 0.8 g/m² of the resulting organopolysiloxane composition onto a polyethylene laminated paper substrate and heating for 30 seconds in a 140°C hot-air dryer to form a coating.

### Example 13

Aside from using as component (b) the copolymer from Synthesis Example 5, the same procedure was carried out as in Example 12.

### Comparative Example 7

Aside from not adding component (b), the same procedure was carried out as in Example 12.

### Comparative Example 8

Aside from changing component (b) to 0.3 part by weight of the phenyl group-containing organopolysiloxane of formula (9) above, the same procedure was carried out as in Example 12.

### EVALUATION

### Method of Evaluating Composition Appearance

The appearances of the organopolysiloxane compositions prepared in the Examples and Comparative Examples were visually examined, and were rated according to the criteria shown below. In addition, after being held at 0°C or below for 6 months following preparation, the compositions were similarly examined and rated according to the following criteria.
A: Dispersibility in composition was good
B: Separation of the additive and the composition occurred

### Method of Measuring Release Force

In accordance with the FINAT test method, Tesa 7475 (a trade name of Tesa Tape, Inc.) acrylic pressure-sensitive adhesive tape having a width of 25 mm was attached to the release sheet produced, loads of 70 g/cm² at 23°C and 20 g/cm² within a 70°C dryer were applied, and the resulting laminate was removed 24 hours later. After 30 minutes of air-cooling, a tensile testing machine (DSC-500 tensile tester, from Shimadzu Corporation) was used to pull the Tesa 7475 tape at an angle of 180° and a peel rate of 0.3 m/min, and the force (mN/25 mm) required to peel off the tape was measured.

### Method of Measuring Subsequent Adhesion Rate

In accordance with the FINAT test method, the Tesa 7475 tape peeled off in the above-described release force measurement was attached to a stainless steel plate, the Tesa 7475 tape was pulled with the above tensile testing machine at an angle of 180° and a peel rate of 0.3 m/min, and the force F (mN/25 mm) required to peel off the tape was measured. As a control, "virgin" Tesa 7475 tape that had not been used was attached to a stainless steel plate and the force Fo (mN/25 mm) required to peel off the tape was measured in the same way as when measuring F above. The subsequent adhesion ratio (%) was calculated from the formula F/F₀ × 100, thereby determining what percentage of the adhesive force was retained by the Tesa 7475 tape used for release force measurement relative to the virgin Tesa 7475 tape.

Tables 1 and 2 below present the evaluation results obtained from the above methods, and also show the easy release additives used in the respective Examples, their weight-average molecular weights, and the starting material weight ratios.

**Table 1**

| Solventless Compositions | | | | | | | | | |
|---|---|---|---|---|---|---|---|---|---|
| | Easy release additive | Weight-average molecular weight | (A)/(B) weight ratio | Composition appearance | | Release force (mN/25 mm) | | Subsequent adhesion ratio (%) | |
| | | | | Immediately after preparation | After 6 months | 23°C | 70°C | 23°C | 70°C |
| Example 1 | Synthesis Example 1 | 14,000 | 41/59 | A | A | 38.2 | 29.4 | 94 | 86 |
| Example 2 | Synthesis Example 2 | 18,000 | 55/45 | A | A | 37.3 | 24.5 | 97 | 87 |
| Example 3 | Synthesis Example 3 | 14,000 | 64/36 | A | A | 34.3 | 30.4 | 91 | 86 |
| Example 4 | Synthesis Example 4 | 24,000 | 72/28 | A | A | 22.6 | 20.6 | 91 | 85 |
| Example 5 | Synthesis Example 5 | 9,000 | 76/24 | A | A | 38.2 | 34.3 | 88 | 86 |
| Example 6 | Synthesis Example 6 | 16,000 | 76/24 | A | A | 39.2 | 37.3 | 90 | 87 |
| Example 7 | Synthesis Example 7 | 9,000 | 85/15 | A | A | 23.5 | 23.5 | 94 | 90 |
| Example 8 | Synthesis Example 8 | 82,000 | 85/15 | A | A | 39.2 | 38.2 | 86 | 85 |
| Example 9 | Synthesis Example 9 | 2,000 | 91/9 | A | A | 25.5 | 24.5 | 86 | 86 |
| Example 10 | Synthesis Example 10 | 11,000 | 91/9 | A | A | 26.5 | 25.5 | 90 | 86 |
| Example 11 | Synthesis Example 11 | 6,000 | 25/75 | A | B | 45.5 | 43.2 | 86 | 85 |
| Comparative Example 1 | no addition | - | - | A | A | 72.6 | 75.5 | 104 | 96 |
| Comparative Example 2 | Synthesis Example 12 | 172,000 | 85/15 | B | B | - | - | - | - |
| Comparative Example 3 | Synthesis Example 13 | 6,000 | 0/100 | B | B | - | - | - | - |
| Comparative Example 4 | phenyl group-containing organopolysiloxane | - | - | A | A | 39.2 | 32.4 | 79 | 80 |
| Comparative Example 5 | vinyl and phenyl group-containing organopolysiloxane | - | - | A | A | 50.3 | 41.0 | 87 | 83 |
| Comparative Example 6 | hydroxyl and phenyl group-containing organopolysiloxane | - | - | A | A | 43.2 | 41.6 | 84 | 82 |

**Table 2**

| Solvent-based Compositions | | | | | | | | | |
|---|---|---|---|---|---|---|---|---|---|
| | Easy release additive | Weight-average molecular weight | (A)/(B) weight ratio | Composition appearance | | Release force (mN/25 mm) | | Subsequent adhesion ratio (%) | |
| | | | | Immediately after preparation | After 6 months | 23°C | 70°C | 23°C | 70°C |
| Example 12 | Synthesis Example 2 | 18,000 | 55/45 | A | A | 49.0 | 30.4 | 94 | 86 |
| Example 13 | Synthesis Example 5 | 9,000 | 76/24 | A | A | 49.0 | 44.1 | 91 | 87 |
| Comparative Example 7 | no addition | - | - | A | A | 109.8 | 107.9 | 99 | 94 |
| Comparative Example 8 | phenyl group-containing organopolysiloxane | - | - | A | A | 61.8 | 44.1 | 84 | 76 |

As a result of evaluation, the organopolysiloxane composition of the invention demonstrated a lower release force and a higher subsequent adhesion ratio than those using conventional easy release additives.

## Claims

1. An organopolysiloxane composition for a release sheet, comprising components (a) to (d) below:
(a) 100 parts by weight of organopolysiloxane having two or more alkenyl groups per molecule, other than component (b);
(b) 0.1 to 20 parts by weight of easy release additive;
(c) 0.1 to 30 parts by weight of organohydrogenpolysiloxane having two or more silicon-bonded hydrogen atoms per molecule; and
(d) platinum group metal catalyst, at a platinum metal weight of from 10 to 1,000 ppm based on the overall composition;
wherein the easy release additive is an acrylic-silicone graft copolymer having a polystyrene-equivalent weight-average molecular weight as measured by gel permeation chromatography (GPC) using toluene as the developing solvent of from 1,000 to 100,000, and being obtainable by radical polymerizing
(A) acrylic and/or methacrylic group-containing organopolysiloxane compound with
(B) radical-polymerizable monomer having one radical polymerizable group per molecule.

2. Organopolysiloxane composition of claim 1 wherein the organopolysiloxane compound (A) for the acrylic-silicone graft copolymer is a radical polymerizable silicone macromonomer of general formula (1) below 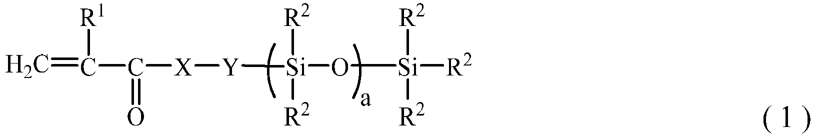 wherein R¹ is a hydrogen atom or a methyl group; X is a group selected from an oxygen atom, an NH group and a sulfur atom; Y is a divalent hydrocarbon group of 1 to 12 carbon atoms which may have an intervening oxygen atom; each R², which may be the same or different, is a substituted or unsubstituted monovalent hydrocarbon group of 1 to 20 carbon atoms, a hydrogen atom, a hydroxyl group, an alkoxy group of 1 to 10 carbon atoms or a substituent of general formula (2) below 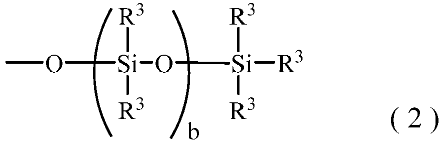 wherein each R³, which may be the same or different, is a substituted or unsubstituted monovalent hydrocarbon group of 1 to 20 carbon atoms, a hydrogen atom, a hydroxyl group, or an alkoxy group of 1 to 10 carbon atoms; and the subscript b is an integer from 0 to 300;
and the subscript a is an integer from 0 to 1,000.

3. Organopolysiloxane composition of claim 1 or 2 in which the acrylic and/or methacrylic group-containing organopolysiloxane compound (A) and the radical polymerizable monomer (B) in the acrylic-silicone graft copolymer have a polymerization weight ratio (A)/(B) of from 30/70 to 99/1.

4. Organopolysiloxane composition of any one of claims 1 to 3 in which said weight-average molecular weight of the acrylic-silicone graft copolymer is from 2,000 to 30,000.

5. Organopolysiloxane composition of any one of claims 1 to 4 in which the radical polymerizable monomer (B) of the acrylic-silicone graft copolymer includes an alkyl (meth)acrylate of 1 to 30 carbon atoms.

6. Organopolysiloxane composition of claim 5 in which the radical polymerizable monomer (B) includes methyl (meth)acrylate.

7. Organopolysiloxane composition of any one of the preceding claims in which the organopolysiloxane (a) having two or more alkenyl groups per molecule is of general formula (3) below: 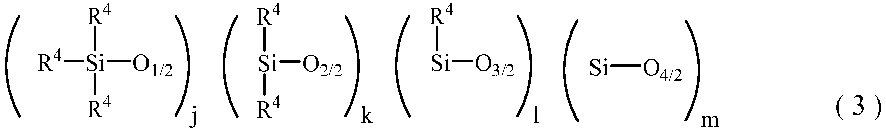 wherein R⁴ represent like or unlike groups selected from substituted or unsubstituted monovalent hydrocarbon groups of 1 to 20 carbon atoms which have no aliphatic unsaturated bonds and alkenyl groups of 2 to 12 carbon atoms which may have an intervening oxygen atom, with at least two R⁴ groups being alkenyl groups;
subscript j is an integer of at least 2, k is an integer of at least 1, 1 is an integer of 0 or more, m is an integer of 0 or more, and 30 ≤ j+k+l+m ≤ 20,000.

8. Organopolysiloxane composition of claim 7 in which, in formula (3) of the organopolysiloxane (a), subscript j is from 2 to 300, k is from 30 to 20,000, 1 is from 0 to 100, m is from 0 to 100, and 50 ≤ j+k+l+m ≤ 15,000.

9. A method of making a release sheet comprising applying an organopolysiloxane composition of any one of claims 1 to 8 onto one or both sides of a sheet-like substrate and heating to form a cured coating.

10. A method according to claim 9 in which the organopolysiloxane composition is coated to a coating weight of from 0.01 to 100 g/m² and then heated at 50 to 200°C for from 1 to 120 seconds.

11. A method according to claim 9 or 10 in which the sheet-like substrate is formed of polyethylene laminated paper, glassine paper, wood-free paper, kraft paper, coated paper such as clay-coated paper, synthetic paper, polyethylene film, polypropylene film such as CPP or OPP, polyester film such as polyethylene terephthalate film, polyamide film, polyimide film, polylactic acid film, polyphenol film or polycarbonate film.

12. A release sheet comprising a sheet-like substrate and a cured coating formed by applying an organopolysiloxane composition of any one of claims 1 to 8 onto one or both sides of the substrate and heating.

13. A release sheet according to claim 12 in which the sheet-like substrate is formed of polyethylene laminated paper, glassine paper, wood-free paper, kraft paper, coated paper such as clay-coated paper, synthetic paper, polyethylene film, polypropylene film such as CPP or OPP, polyester film such as polyethylene terephthalate film, polyamide film, polyimide film, polylactic acid film, polyphenol film or polycarbonate film.

14. A release sheet of claim 12 or 13 having a release force, as determined by the FINAT test method carrying out measurement at an angle of 180° and a peel rate of 0.3 m/min, of 50 mN/25 mm or less.

15. A release sheet of claim 14 having a subsequent adhesion ratio of at least 80%.

## Patentansprüche

1. Organopolysiloxan-Zusammensetzung für eine Abziehfolie, die die folgenden Komponenten (a) bis (d) umfasst:
(a) 100 Gewichtsteile Organopolysiloxan mit zwei oder mehr Alkenylgruppen pro Molekül, das nicht Komponente (b) ist;
(b) 0,1 bis 20 Gewichtsteile eines Additivs für leichte Abziehbarkeit;
(c) 0,1 bis 30 Gewichtsteile Organohydrogenpolysiloxan mit zwei oder mehr siliciumgebundenen Wasserstoffatomen pro Molekül; und
(d) Platingruppenmetall-Katalysator in einem Gewicht von metallischem Platin von 10 bis 1.000 ppm, bezogen auf die gesamte Zusammensetzung;
wobei das Additiv für leichte Abziehbarkeit ein Acrylat-Silikon-Propfcopolymer ist, das laut Messung mittels Gelpermeationschromatographie (GPC) unter Verwendung von Toluol als Entwicklungslösungsmittel, ein gewichtsmittleres Polystyroläquivalent-Molekulargewicht von 1.000 bis 100.000 aufweist und durch radikalische Polymerisation
(A) einer Acrylat- und/oder Methacrylatgruppen-hältigen Organopolysiloxan-Verbindung mit
(B) einem radikalisch polymerisierbaren Monomer, das eine radikalisch polymerisierbare Gruppe pro Molekül aufweist, erhältlich ist.

2. Organopolysiloxan-Zusammensetzung nach Anspruch 1, wobei die Organopolysiloxan-Verbindung (A) für das Acrylat-Silikon-Propfcopolymer ein radikalisch polymerisierbares Silikon-Makromonomer der folgenden allgemeinen Formel (1) ist: 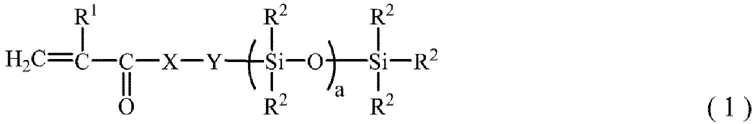 worin R¹ ein Wasserstoffatom oder eine Methylgruppe ist; X eine aus einem Sauerstoffatom, einer NH-Gruppe und einem Schwefelatom ausgewählte Gruppe ist; Y eine zweiwertige Kohlenwasserstoffgruppe mit 1 bis 12 Kohlenstoffatomen ist, die gegebenenfalls ein dazwischen liegendes Sauerstoffatom aufweist; die R², die gleich oder unterschiedlich sein können, jeweils eine substituierte oder unsubstituierte einwertige Kohlenwasserstoffgruppe mit 1 bis 20 Kohlenstoffatomen, ein Wasserstoffatom, eine Hydroxylgruppe, eine Alkoxygruppe mit 1 bis 10 Kohlenstoffatomen oder ein Substituent der folgenden allgemeinen Formel (2) sind: 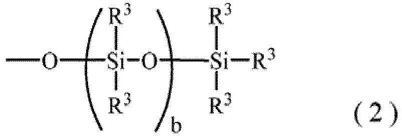 worin die R³, die gleich oder unterschiedlich sein können, jeweils eine substituierte oder unsubstituierte einwertige Kohlenwasserstoffgruppe mit 1 bis 20 Kohlenstoffatomen, ein Wasserstoffatom, eine Hydroxylgruppe oder eine Alkoxygruppe mit 1 bis 10 Kohlenstoffatomen sind; und der Index b eine ganze Zahl von 0 bis 300 ist; und
der Index a eine ganze Zahl von 0 bis 1.000 ist.

3. Organopolysiloxan-Zusammensetzung nach Anspruch 1 oder 2, wobei die Acrylat- und/oder Methacrylatgruppen-hältige Organopolysiloxan-Verbindung (A) und das radikalisch polymerisierbare Monomer (B) in dem Acrylat-Silikon-Propfcopolymer ein Polymerisationsgewichtsverhältnis (A)/(B) von 30/70 bis 99/1 aufweisen.

4. Organopolysiloxan-Zusammensetzung nach einem der Ansprüche 1 bis 3, wobei das gewichtsmittlere Molekulargewicht des Acrylat-Silikon-Propfcopolymers 2.000 bis 30.000 beträgt.

5. Organopolysiloxan-Zusammensetzung nach einem der Ansprüche 1 bis 4, wobei das radikalisch polymerisierbare Monomer (B) des Acrylat-Silikon-Propfcopolymers ein Alkyl-(meth)acrylat mit 1 bis 30 Kohlenstoffatomen umfasst.

6. Organopolysiloxan-Zusammensetzung nach Anspruch 5, wobei das radikalisch polymerisierbare Monomer (B) Methyl(meth)acrylat umfasst.

7. Organopolysiloxan-Zusammensetzung nach einem der vorangegangen Ansprüche, wobei das Organopolysiloxan (a), das zwei oder mehr Alkenylgruppen pro Molekül aufweist, durch die folgende allgemeine Formel (3) dargestellt ist: 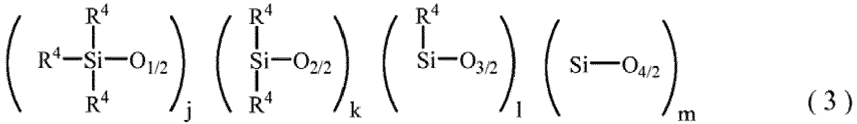 worin R⁴ für gleiche oder ungleiche Gruppen steht, die aus substituierten oder unsubstituierten einwertigen Kohlenwasserstoffgruppen mit 1 bis 20 Kohlenstoffatomen ohne aliphatische ungesättigte Bindungen und Alkenylgruppen mit 2 bis 12 Kohlenstoffatomen, die gegebenenfalls ein dazwischen liegendes Sauerstoffatom aufweisen, ausgewählt sind, wobei zumindest zwei Gruppen R⁴ Alkenylgruppen sind;
der Index j eine ganze Zahl von zumindest 2 ist, k eine ganze Zahl von zumindest 1 ist, I eine ganze Zahl von 0 oder mehr ist, m eine ganze Zahl von 0 oder mehr ist und gilt: 30 ≤ j+k+l+m ≤ 20.000.

8. Organopolysiloxan-Zusammensetzung nach Anspruch 7, wobei in Formel (3) des Organopolysiloxans (a) der Index j = 2 bis 300 ist, k = 30 bis 20.000 ist, I = 0 bis 100 ist, m = 0 bis 100 ist und gilt: 50 ≤ j+k+l+m ≤ 15.000.

9. Verfahren zur Herstellung einer Abziehfolie, welches das Aufbringen einer Organopolysiloxan-Zusammensetzung nach einem der Ansprüche 1 bis 8 auf eine oder beide Seiten eines folienähnlichen Substrats und das Erhitzen zur Bildung einer gehärteten Beschichtung umfasst.

10. Verfahren nach Anspruch 9, wobei die Organopolysiloxan-Zusammensetzung bis zu einem Beschichtungsgewicht von 0,01 bis 100 g/m² beschichtet und dann 1 bis 120 Sekunden lang auf 50 °C bis 200 °C erhitzt wird.

11. Verfahren nach Anspruch 9 oder 10, wobei das folienähnliche Substrat aus mit Polyethylen laminiertem Papier, Pergaminpapier, holzfreiem Papier, Kraftpapier, beschichtetem Papier, wie z. B. tonbeschichtetem Papier, synthetischem Papier, Polyethylenfolie, Polypropylenfolie, wie z. B. CPP oder OPP, Polyesterfolie, wie z. B. Polyethylenterephthalatfolie, Polyamidfolie, Polyimidfolie, Polymilchsäurefolie, Polyphenolfolie oder Polycarbonatfolie besteht.

12. Abziehfolie, die ein folienähnliches Substrat und eine gehärtete Beschichtung umfasst, die durch Aufbringen einer Organopolysiloxan-Zusammensetzung nach einem der Ansprüche 1 bis 8 auf eine oder beide Seiten des Substrats und Erhitzen hergestellt wurde.

13. Abziehfolie nach Anspruch 12, wobei das folienähnliche Substrat aus mit Polyethylen laminiertem Papier, Pergaminpapier, holzfreiem Papier, Kraftpapier, beschichtetem Papier, wie z. B. tonbeschichtetem Papier, synthetischem Papier, Polyethylenfolie, Polypropylenfolie, wie z. B. CPP oder OPP, Polyesterfolie, wie z. B. Polyethylenterephthalatfolie, Polyamidfolie, Polyimidfolie, Polymilchsäurefolie, Polyphenolfolie oder Polycarbonatfolie besteht.

14. Abziehfolie nach Anspruch 12 oder 13, die laut Bestimmung durch das FINAT-Testverfahren, wobei die Messung in einem Winkel von 180° und mit einer Abziehgeschwindigkeit von 0,3 m/min durchgeführt wird, eine Abziehkraft von 50 mN/25 mm oder weniger aufweist.

15. Abziehfolie nach Anspruch 14, die einen anschließenden Haftfähigkeitsanteil von zumindest 80 % aufweist.

## Revendications

1. Composition d'organopolysiloxane pour une feuille antiadhésive, comprenant les composants (a) à (d) ci-dessous :
(a) 100 parties en poids d'un organopolysiloxane ayant deux ou plus de deux groupes alcényle par molécule, autre que le composant (b) ;
(b) 0,1 à 20 parties en poids d'un additif de décollage facile ;
(c) 0,1 à 30 parties en poids d'un organohydrogénopolysiloxane ayant deux ou plus de deux atomes d'hydrogène liés au silicium par molécule ; et
(d) un catalyseur à base d'un métal du groupe du platine, en un poids de platine métallique de 10 à 1000 ppm par rapport à la composition globale ;
dans laquelle l'additif de décollage facile est un copolymère greffé de silicone-acrylique ayant une masse moléculaire moyenne en masse équivalant au polystyrène, telle que mesurée par chromatographie d'exclusion diffusion (GPC) utilisant du toluène en tant que solvant révélateur, de 1 000 à 100 000, et qui peut être obtenu par polymérisation radicalaire
(A) d'un composé organopolysiloxane contenant un groupe acrylique et/ou méthacrylique avec
(B) un monomère polymérisable par voie radicalaire ayant un seul groupe polymérisable par voie radicalaire par molécule.

2. Composition d'organopolysiloxane selon la revendication 1, dans laquelle le composé organopolysiloxane (A) pour le copolymère greffé de silicone-acrylique est un macromonomère de silicone polymérisable par voie radicalaire de formule générale (1) ci-dessous 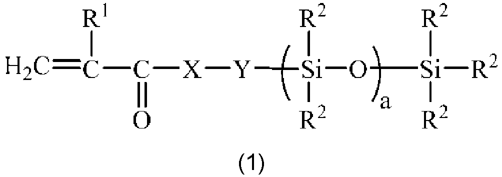 dans laquelle R¹ est un atome d'hydrogène ou un groupe méthyle ; X est un groupe choisi parmi un atome d'oxygène, un groupe NH et un atome de soufre ; Y est un groupe hydrocarboné divalent de 1 à 12 atomes de carbone qui peut avoir un atome d'oxygène intervenant ; chaque R², qui peut être identique ou différent, est un groupe hydrocarboné monovalent substitué ou non substitué de 1 à 20 atomes de carbone, un atome d'hydrogène, un groupe hydroxyle, un groupe alcoxy de 1 à 10 atomes de carbone ou un substituant de formule générale (2) ci-dessous 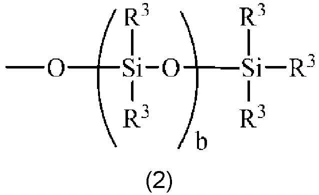 dans laquelle chaque R³, qui peut être identique ou différent, est un groupe hydrocarboné monovalent substitué ou non substitué de 1 à 20 atomes de carbone, un atome d'hydrogène, un groupe hydroxyle, un groupe alcoxy de 1 à 10 atomes de carbone ; et l'indice b est un entier de 0 à 300 ;
et l'indice a est un entier de 0 à 1 000.

3. Composition d'organopolysiloxane selon la revendication 1 ou 2, dans laquelle le composé organopolysiloxane contenant un groupe acrylique et/ou méthacrylique (A) et le monomère polymérisable par voie radicalaire (B) dans le copolymère greffé de silicone-acrylique ont un rapport en poids de polymérisation (A)/(B) de 30/70 à 99/1.

4. Composition d'organopolysiloxane selon l'une quelconque des revendications 1 à 3, dans laquelle ladite masse moléculaire moyenne en masse du copolymère greffé de silicone-acrylique est de 2 000 à 30 000.

5. Composition d'organopolysiloxane selon l'une quelconque des revendications 1 à 4, dans laquelle le monomère polymérisable par voie radicalaire (B) du copolymère greffé de silicone-acrylique comprend un (méth)acrylate d'alkyle de 1 à 30 atomes de carbone.

6. Composition d'organopolysiloxane selon la revendication 5, dans laquelle le monomère polymérisable par voie radicalaire (B) comprend du (méth)acrylate de méthyle.

7. Composition d'organopolysiloxane selon l'une quelconque des revendications précédentes, dans laquelle l'organopolysiloxane (a) ayant deux ou plus de deux groupes alcényle par molécule est de formule générale (3) ci-dessous : 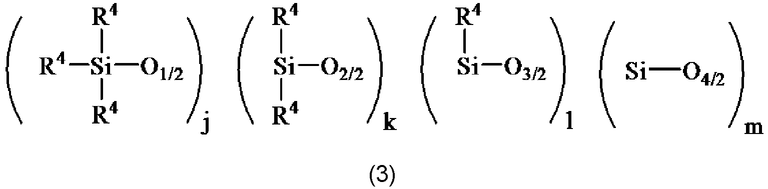 dans laquelle les R⁴ représentent des groupes semblables ou dissemblables choisis parmi les groupes hydrocarbonés monovalents substitués ou non substitués de 1 à 20 atomes de carbone qui n'ont pas de liaison insaturée aliphatique et les groupes alcényle de 2 à 12 atomes de carbone qui peuvent avoir un atome d'oxygène intervenant, au moins deux groupes R⁴ étant des groupes alcényle ; l'indice j est un entier valant au moins 2, k est un entier valant au moins 1, I est un entier valant 0 ou plus, m est un entier valant 0 ou plus, et 30 ≤ j+k+l+m ≤ 20 000.

8. Composition d'organopolysiloxane selon la revendication 7, dans laquelle, dans la formule (3) de l'organopolysiloxane (a), l'indice j vaut de 2 à 300, k vaut de 30 à 20 000, l vaut de 0 à 100, m vaut de 0 à 100, et 50 ≤ j+k+l+m ≤ 15 000.

9. Procédé de production d'une feuille antiadhésive, comprenant l'application d'une composition d'organopolysiloxane de l'une quelconque des revendications 1 à 8 sur un côté ou sur les deux côtés d'un substrat en forme de feuille, et le chauffage pour former un revêtement durci.

10. Procédé selon la revendication 9, dans lequel la composition d'organopolysiloxane est déposée sous forme de revêtement jusqu'à un poids de revêtement de 0,01 à 100 g/m² et ensuite chauffée à 50 à 200°C pendant 1 à 120 secondes.

11. Procédé selon la revendication 9 ou 10, dans lequel le substrat en forme de feuille est formé d'un papier stratifié de polyéthylène, d'un papier cristal, d'un papier sans bois, d'un papier kraft, d'un papier couché tel qu'un papier au kaolin, d'un papier synthétique, d'un film de polyéthylène, d'un film de polypropylène tel que le CPP ou l'OPP, d'un film de polyester tel qu'un film de poly(téréphtalate d'éthylène), d'un film de polyamide, d'un film de polyimide, d'un film de poly(acide lactique), d'un film de polyphénol ou d'un film de polycarbonate.

12. Feuille antiadhésive comprenant un substrat en forme de feuille et un revêtement durci formé par application d'une composition d'organopolysiloxane de l'une quelconque des revendications 1 à 8 sur un côté ou sur les deux côtés du substrat, et chauffage.

13. Feuille antiadhésive selon la revendication 12, dans laquelle le substrat en forme de feuille est formé d'un papier stratifié de polyéthylène, d'un papier cristal, d'un papier sans bois, d'un papier kraft, d'un papier couché tel qu'un papier au kaolin, d'un papier synthétique, d'un film de polyéthylène, d'un film de polypropylène tel que le CPP ou l'OPP, d'un film de polyester tel qu'un film de poly(téréphtalate d'éthylène), d'un film de polyamide, d'un film de polyimide, d'un film de poly(acide lactique), d'un film de polyphénol ou d'un film de polycarbonate.

14. Feuille antiadhésive selon la revendication 12 ou 13 ayant une force de décollage, telle que déterminée par la méthode de test FINAT mettant en œuvre une mesure à un angle de 180° et avec un angle de pelage de 0,3 m/min, de 50 mN/25 mm ou moins.

15. Feuille antiadhésive selon la revendication 14, ayant un taux d'adhérence ultérieure d'au moins 80 %.
